**Europäisches Patentamt**

**European Patent Office**

**Office européen des brevets**

(11) Veröffentlichungsnummer: **0 440 826 A1**

# (12) EUROPÄISCHE PATENTANMELDUNG

(21) Anmeldenummer: **90101108.0**

(22) Anmeldetag: **19.01.90**

(51) Int. Cl.5: **F16K 1/52**

(30) Priorität: **01.02.89 EP 89101736**

(43) Veröffentlichungstag der Anmeldung:
**14.08.91 Patentblatt 91/33**

(84) Benannte Vertragsstaaten:
**AT DE DK FR GB IT**

(71) Anmelder: **KKW Kulmbacher
Klimageräte-Werk GmbH
Postfach 1569 Am Goldenen Feld 18
W-8650 Kulmbach(DE)**

(72) Erfinder: **Mikhail, Noya, Dipl.-Ing.
Am Lindig 32
W-8641 Weissenbrunn(DE)**
Erfinder: **Rodecker, Artur, Dipl.-Ing.
Wickenreuther-Allee 46
W-8560 Kulmbach(DE)**

(74) Vertreter: **Tergau, Enno, Dipl.-Ing. et al
Tergau & Pohl Patentanwälte Hefnersplatz 3
Postfach 119347
W-8500 Nürnberg 11(DE)**

(54) **Ventil.**

(57) Ventil (1), auf dessen Düsenstößel (2) ein von außen, insbesondere von einem Regler (7) beaufschlagter Stellkörper (4) eines Stellorgans (5) einwirkt, so daß einerseits eine Schließstellung der Düse und andererseits eine begrenzte Offenstellung erzielbar ist.

- Der Düsenstößel (2), bzw. eine Wirkverlängerung hierzu als Ventilstößel (3), ist in Schließstellung der Düse mittels eines längenverstellbaren Anpassungsstücks (8) bezüglich des Ventilgehäuses auf eine Position einstellbar ist, an der der Stellkörper (4) des Stellorgans (5) ansteht.

- Der Düsenstößel (2) bzw. Ventilstößel (3) findet in Öffnungsrichtung (9) der Düse einen Anschlag (10), der im Zusammenhang mit einer genauen Länge (11) des Stößels zwischen seinem Anschlag (10) und seiner Stirn (12), zum Stellorgan (5), und einer genauen Länge (13) zwischen Gehäusestirn (14), zum Stellorgan (5), und dem Anschlag (10) andererseits einen definierten Stößelhub bezogen auf die Gehäusestirn (14) zum Stellorgan begrenzt, der in Abhängigkeit von der mittels des Anpassungsstücks (8) eingestellten Stößelposition als einstellbarer Arbeitshub zur Verfügung steht.

FIG 1

## VENTIL

Die Erfindung bezieht sich auf ein Ventil, auf dessen Düsenstößel ein von außen, insbesondere von einem Regler, beaufschlagter Stellkörper eines Stellorgans einwirkt, so daß einerseits eine Schließstellung der Düse und andererseits eine begrenzte Offenstellung erzielbar ist.

Derartige Ventile sind als druckgesteuerte Ventile für Bypaß-Leitungen auf dem Markt, um durch dosiertes Zumischen eines Mediums auf einem bestimmten Temperaturniveau ein anderes Medium in seiner Temperatur zu verändern. Insbesondere werden solche Ventile in sogenannten Heißgas-Bypaß-Leitungen eingesetzt. Üblicherweise sind die Ventile mittels einer Membran druckgeregelt. Es sind jedoch auch Ventile mit Stellmotor bekannt. Bei Ventilen, die zum Regeln von einem Stellorgan beaufschlagt werden, gehen in das Betriebsverhalten und Regelverhalten die Toleranzen des Ventils und Toleranzen zwischen Ventil und Stellorgan störend ein.

Derartige Toleranzen sind um so störender, je feinfühliger die Regelung sein soll. Sensible Einsatzgebiete sind beispielsweise medizinische Geräte wie Computer-Tomographen, deren Kühlsystem sich während des Betriebs an große Leistungsänderungen anpassen muß. So muß beispielsweise bei externer Luftkühlung und internem Kühlwasserkreis dieser bei einem Gerät dieser Art einem Leistungsspektrum von 2 bis 7 oder auch 14 kW Leistung folgen und beispielsweise die Kühlwassertemperatur auf 18°C im Vorlauf konstant halten.

Der Erfindung liegt die Aufgabe zugrunde, ein Ventil zu entwickeln, das in sich und in Bezug auf ein Stellorgan, mit dem es zu montieren ist, störende Toleranzen ausschalten läßt.

Die Lösung der geschilderten Aufgabe besteht nach der Erfindung in einem Ventil mit den Merkmalen nach Patentanspruch 1. Der Düsenstößel bzw. eine Wirkverlängerung hierzu als Ventilstößel, ist danach in Schließstellung mittels eines längenverstellbaren Anpassungsstücks bezüglich des Ventilgehäuses auf eine Position einstellbar, an der der Stellkörper des Stellorgans anstehen kann.

Weiter findet der Düsenstößel bzw. Ventilstößel in Öffnungsrichtung der Düse einen Anschlag, der im Zusammenhang mit einer genauen Länge des Stößels zwischen seinem Anschlag und seiner Stirn, zum Stellorgan, einerseits und einer genauen Länge zwischen Gehäusestirn, zum Stellorgan, und dem Anschlag andererseits einen definierten Stößelhub, bezogen auf die Gehäusestirn zum Stellorgan, begrenzt. Durch das längenverstellbare Anpassungsstück steht somit ein einstellbarer Arbeitshub zur Verfügung. Der Düsenstößel bzw. der Ventilstößel läßt sich dadurch toleranzausgleichend an den Stellkörper eines Stellorgans anpassen. Andererseits steht ein überschaubarer, von Toleranzen weitgehend unbeeinflußter Arbeitshub für das Ventil zur Verfügung, so daß Regelmaßnahmen eine eindeutige zuordenbare Ventilstellung ergeben.

Es ist günstig, wenn der Anschlag relativ nahe zur Stößelstirnseite ausgebildet ist, da die genau einzuhaltenden Abmessungen dann entsprechend kurz sein können.

Vorteilhafterweise ist der Stößel, also der Düsenstößel bzw. der Ventilstößel, zwischen seiner Stirn und der Düse zumindest mittels einer Dichtung abgedichtet, um den Austritt des jeweiligen Arbeitsmediums im Leckfall zu verhindern.

Das Anpassungsstück kann vorteilhafterweise als zwei miteinander verschraubbare Gehäuseteile ausgeführt sein, die in der angepaßten Stellung durch einen rundum aufgetragenen gasdichten Kleber oder ein anderes Versiegelungsmittel festgelegt sind.

Nicht zuletzt aus Gründen des Umweltschutzes ist es vorteilhaft, die Dichtung als Druckabdichtung an sich bekannter Art auszuführen, die von der Düse her beaufschlagbar ist. Im Fall von Lecks austretendes Arbeits- bzw. Kühlmedium führt dann zum Zusammenpressen der Dichtflächen unter dem Druck des Arbeitsmediums.

Vorteilhafterweise ist der Stößel im Gehäuse durch Passung oder Paßmittel, wozu der Dichtungsring beitragen kann, verkantungsfrei geführt.

Nach einem Ausführungsbeispiel des Ventils arbeitet das Stellorgan mit einem Stellmotor, der mittels eines Stellkörpers auf den Stößel einwirkt.

Vorteilhafterweise steht das Stellorgan auf der Gehäusestirn des Ventils mit einer Bezugsfläche auf.

Es ergibt sich eine einfache Konstruktion, wenn das Anpassungsstück als Zwischenstück zwischen einem Düsengehäuse und einem Gehäuse eines Stellorgans ausgeführt ist. Verständlicherweise kann das Anpassungsstück auch funktionsentsprechend im Düsengehäuse oder im Gehäuse des Stellorgans ausgeführt sein.

Die Erfindung soll nun anhand von in der Zeichnung grob schematisch wiedergegebenen Ausführungsbeispielen näher erläutert werden:

In FIG 1 ist ein Ventil, teilweise im Längsschnitt und mit einem Stellorgan zusammengebaut veranschaulicht.

In FIG 2 ist ein Ventil im Düsenbereich im Längsschnitt wiedergegeben.

In FIG 3 ist im Längsschnitt ein Anpassungsstück dargestellt, das zusammen mit einem passenden Gewinde in einem Teil des Ventilgehäuses die Funktion eines längenverstellbaren Anpassungsstücks erfüllt.

In FIG 4 ist ein Anwendungsbeispiel für das Ventil mit Stellorgan wiedergegeben.

In FIG 5 ist eine Dichtung in der Ausführung als Druckabdichtung in vergrößertem Maßstab veranschaulicht.

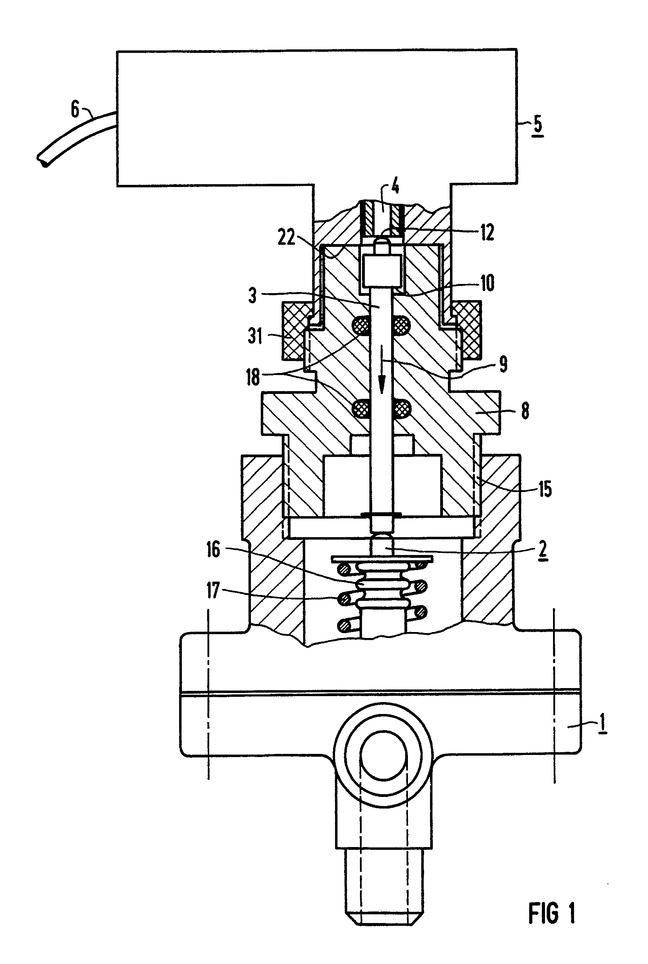

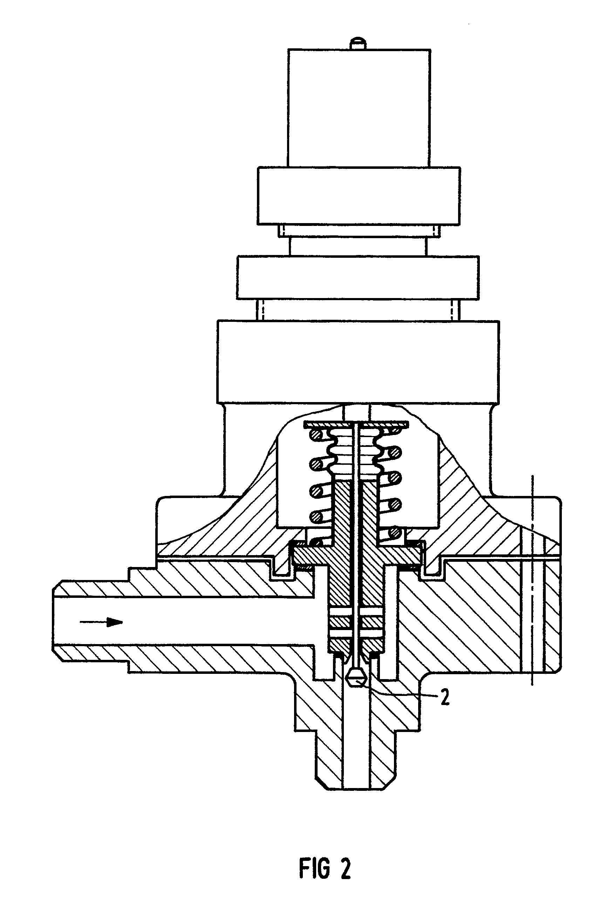

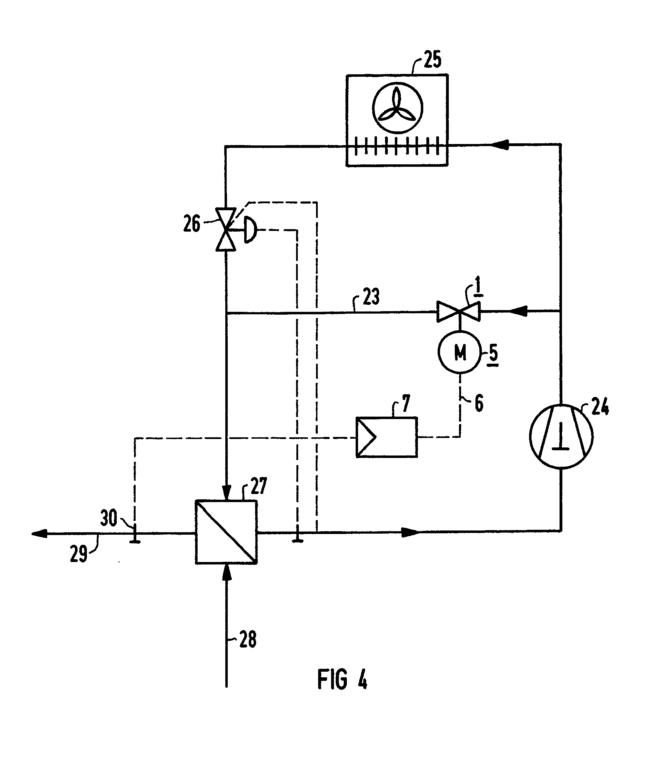

Das Ventil 1 nach FIG 1 weist einen Düsenstößel 2 auf, auf dessen Verlängerung zu einem Ventilstößel 3 ein von außen beaufschlagbarer Stellkörper 4 einwirkt. Der Stellkörper ist stellendes Teil des Stellorgans, das über eine elektrische Leitung 6 von einem Regler 7 nach FIG 4 beaufschlagt werden kann. Der Düsenstößel 2 ist nach FIG 2 in der Schließstellung der Düse veranschaulicht. Er kann zu einer begrenzten Offenstellung gebracht werden. Hierzu ist der Düsenstößel 2 nach FIG 1 bzw. eine Wirkverlängerung hierzu als Ventilstößel 3 in Schließstellung der Düse mittels eines längenverstellbaren Anpassungsstücks 8 bezüglich des Ventilgehäuses auf eine Position einstellbar, an der der Stellkörper 4 des Stellorgans 5 aufsteht.

Der Düsenstößel 2 bzw. der Ventilstößel 3 findet in Öffnungsrichtung 9 der Düse einen Anschlag 10, der im Zusammenhang mit den nachstehenden relativ genauen Längen einen genauen Arbeitshub ergibt:

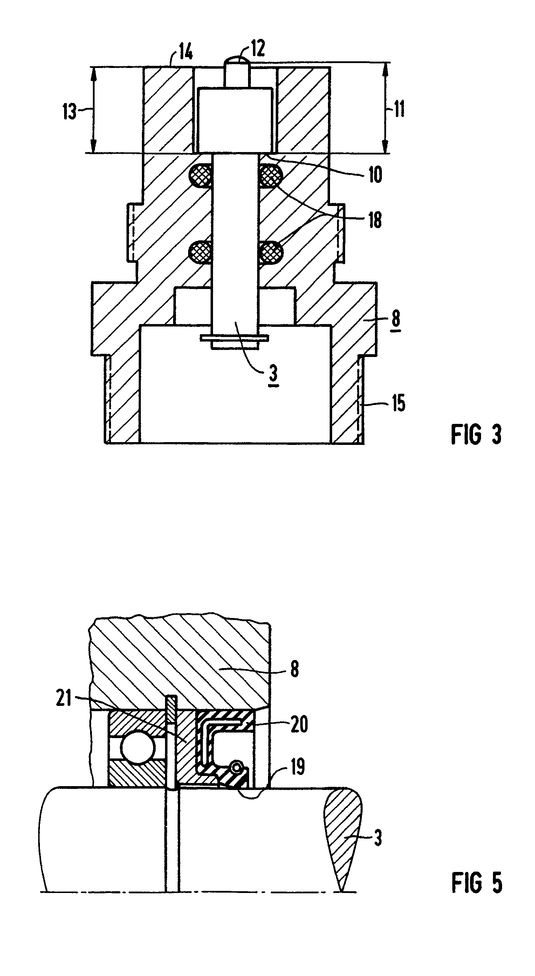

In der Fertigung ist mit engen Toleranzen einzuhalten die Länge 11 des Stößels nach FIG 3 zwischen seinem Anschlag 10 und seiner Stirn 12, die dem Stellorgan zugewandt ist. Ebenso ist mit zumindest engen Toleranzen einzuhalten die Länge 13 zwischen Gehäusestirn 14 zum Stellorgan und dem Anschlag 10 andererseits. Beim erfindungsgemäßen Ventil erzielt man einen definierten Stößelhub bezogen auf die Gehäusestirn 14 zum Stellorgan, der in Abhängigkeit von der mittels des Anpassungsstücks 8 einstellbaren Stößelposition als einstellbarer Arbeitshub zur Verfügung steht. Andererseits kann der Düsenstößel 2 bzw. der Ventilstößel 3 zum Stellkörper 4 des Stellorgans 5 justiert werden.

Das Anpassungsstück 8 kann zur Längenverstellung in einem ausreichend langen Gewinde 15 mit Gegengewinde verstellt werden. Wenn auch die Funktion des Anpassungsstücks zur Längenverstellung eine Zweiteiligkeit voraussetzt, so genügt es in der Praxis, wenn das eigentliche Anpassungsstück 8 einteilig ist und im Gewinde eines entsprechenden Gehäuseteils verschraubt werden kann.

Die Schließstellung des Ventils und die Kräfte, die zur Öffnung des Ventils erforderlich sind, werden in an sich bekannter Weise im Ausführungsbeispiel durch eine Wellenmembran 16 und eine Druckfeder 17 vorgegeben.

Der Anschlag 10 ist im Ausführungsbeispiel relativ nahe zur Stirn 12 des Stößels bzw. Ventilstößel 3 ausgeführt. Dadurch können die genau einzuhaltenden Abmessungen kurz sein. Im Fall von Lecks, insbesondere der Wellenmembran 16, ist es günstig, wenn zusätzliche Abdichtungen vorgesehen sind. So sollte der Stößel zwischen seiner Stirn 12 und der Düse 1 zumindest mittels einer weiteren Dichtung 18 abgedichtet sein.

Die Gewinde 15 für die längenverstellbare Funktion des Anpassungsstücks 8 können durch einen rundum aufgetragenen gasdichten Kleber oder ein anderes geeignetes Versiegelungsmittel in ihrer Einstellung festgelegt sein, so daß im Falle eines Lecks auch hier Arbeitsmittel nicht austreten kann. Es ist besonders günstig, wenn die Dichtung 18 als Druckabdichtung nach FIG 5 ausgeführt ist. Die Druckabdichtung ist von der Düse her von einem unter Druck stehenden Arbeitsmedium beaufschlagbar. Unter Druck wird eine Lippe 19 gegen den Ventilstößel 3 angepreßt. Hierzu ist der elastische Körper 20 der Druckabdichtung außer durch die Wandung des Anpassungsstücks 8 in an sich bekannter Weise noch durch einen axial gesicherten Stützkörper 21 zu sichern.

Es erleichtert die Einstellung, wenn das Stellorgan 5 auf der Gehäusestirn des Ventils bzw. seines Anpassungsstücks 8 mit einer Bezugsfläche 22 aufsteht. Im Ausführungsbeispiel nach FIG 1 ist das Stellorgan 5 mit einer Überwurfmutter 31 mit dem Anpassungsstück 8 verschraubt.

Im Anwendungsbeispiel nach FIG 4 ist das Ventil 1 von einem Stellmotor eines Stellorgans 5 beaufschlagt, der seinerseits vom Regler 7 geregelt ist, was zu einer entsprechenden Ventilöffnung führt. Das Ventil 1 ist im Bypaß 23 eines Kühlkreises eingebaut. Im Hauptkreis liegt ein Verdichter 24, der beispielsweise heißes Gas einer Verflüssigereinheit 25 bzw. Kondensator zuführt. Von dort gelangt das Arbeitsmedium zu einem Drosselorgan 26 und einem Verdampfer 27. Der Arbeitskühlkreis wird durch die Leitungen 28 und der Vorlaufleitung 29 veranschaulicht. Ein Sensor 30 mißt die Temperatur des Kühlmediums in der Vorlaufleitung, wozu der Regler 7 das Ventil 1 in der Bypaß-Leitung 23 entsprechend öffnet oder schließt. Verständlicherweise können die Vorteile des Ventils auch in allen anderen Schaltungen zur Geltung kommen, wo es auf definierte und exakt zuordenbare Ventilstellungen ankommt.

**Patentansprüche**

1.  Ventil (1), auf dessen Düsenstößel (2) ein von außen, insbesondere von einem Regler (7) beaufschlagter Stellkörper (4) eines Stellorgans (5) einwirkt, so daß einerseits eine Schließstellung der Düse und andererseits eine begrenzte Offenstellung erzielbar ist, **dadurch gekennzeichnet,**

    - daß der Düsenstößel (2), bzw. eine Wirkverlängerung hierzu als Ventilstößel (3),

in Schließstellung der Düse mittels eines längenverstellbaren Anpassungsstücks (8) bezüglich des Ventilgehäuses auf eine Position einstellbar ist, an der der Stellkörper (4) des Stellorgans (5) ansteht,

- daß der Düsenstößel (2) bzw. Ventilstößel (3) in Öffnungsrichtung (9) der Düse einen Anschlag (10) findet, der im Zusammenhang mit einer genauen Länge (11) des Stößels zwischen seinem Anschlag (10) und seiner Stirn (12), zum Stellorgan (5), und einer genauen Länge (13) zwischen Gehäusestirn (14), zum Stellorgan (5), und dem Anschlag (10) andererseits einen definierten Stößelhub bezogen auf die Gehäusestirn (14) zum Stellorgan begrenzt, der in Abhängigkeit von der mittels des Anpassungsstücks (8) eingestellten Stößelposition als einstellbarer Arbeitshub zur Verfügung steht.

2. Ventil nach Anspruch 1, **dadurch gekennzeichnet,** daß der Anschlag (10) relativ nahe zur Stößelstirnseite (12) ausgebildet ist.

3. Ventil nach Anspruch 1, **dadurch gekennzeichnet,** daß der Stößel zwischen seiner Stirn und der Düse zumindest mittels einer Dichtung (18) abgedichtet ist.

4. Ventil nach Anspruch 1, **dadurch gekennzeichnet,** daß das Anpassungsstück (8) als zwei miteinander verschraubbare Gehäuseteile ausgeführt ist, die in der angepaßten Stellung durch einen rundum aufgetragenen gasdichten Kleber festgelegt sind.

5. Ventil nach Anspruch 3, **dadurch gekennzeichnet,** daß die Dichtung (18) als Druckabdichtung ausgeführt ist, die von der Düse her beaufschlagbar ist.

6. Ventil nach Anspruch 1, **dadurch gekennzeichnet,** daß der Stößel im Gehäuse durch Passung oder Paßmittel verkantungsfrei geführt ist.

7. Ventil nach Anspruch 1, **dadurch gekennzeichnet,** daß das Stellorgan (5) mit einem Stellmotor arbeitet, der mittels eines Stellkörpers (4) auf den Stößel einwirkt.

8. Ventil nach Anspruch 1, **dadurch gekennzeichnet,** daß das Stellorgan (5) auf der Gehäusestirn des Ventils (1) bzw. seines Anpassungsstücks (8) mit einer Bezugsfläche (22) aufsteht.

9. Ventil nach Anspruch 1, **dadurch gekennzeichnet,** daß das Anpassungsstück (8) als Zwischenstück zwischen einem Düsengehäuse und einem Gehäuse eines Stellorgans (5) ausgeführt ist.

FIG 1

FIG 2

FIG 3

FIG 5

EP 0 440 826 A1

FIG 4

Europäisches Patentamt

# EUROPÄISCHER RECHERCHENBERICHT

Nummer der Anmeldung

EP  90 10 1108

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4099703 (LUSH)<br>* Figur 2 *<br>--- | 1, 3, 4 | F16K1/52 |
| A | DE-C-357542 (MASSIP)<br>* Figuren 1, 2 *<br>--- | 1 | |
| A | DE-A-2614672 (AGA RADIATOR)<br>* Figur 1, Position 15 *<br>----- | 1 | |

|  |
|---|
| **RECHERCHIERTE SACHGEBIETE (Int. Cl.5)**<br><br>F16K |

Der vorliegende Recherchenbericht wurde für alle Patentansprüche erstellt

| Recherchenort | Abschlußdatum der Recherche | Prüfer |
|---|---|---|
| BERLIN | 16 AUGUST 1990 | SCHLABBACH M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)